# EUROPEAN PATENT SPECIFICATION

(11) **EP 1 582 557 B1**
(45) Date of publication and mention of the grant of the patent: **11.03.2009**
(21) Application number: 04075917.7
(22) Date of filing: 22.03.2004
(51) Int. Cl.: C08J 7/04, B32B 27/30, B32B 27/08, C08L 29/04

(54) **Multilayer coating composition**
Mehrschicht-Beschichtungszusammensetzung
Composition de revêtement à plusieurs couches

(43) Date of publication of application: 05.10.2005
(73) Proprietor: Paramelt B.V., 1704 RJ Heerhugowaard (NL)
(72) Inventor: Van Rijsbergen, Johannes Marinus, 3602 XN Maarssen (NL); Felix, Hendrikus Marinus, 2022 CN Haarlem (NL); Capendale, John, 1721 DJ Broek op Langedijk (NL)
(74) Representative: van Westenbrugge, Andries

(56) References cited:
- EP-A- 0 613 773
- WO-A-92/02573
- WO-A-96/16797
- WO-A-96/16799
- PATENT ABSTRACTS OF JAPAN vol. 2002, no. 06, 4 June 2002 (2002-06-04) & JP 2002 052660 A (YUPO CORP), 19 February 2002 (2002-02-19)

## Description

The present invention relates to a composition for coating a flexible substrate with improved water vapour and oxygen barrier properties together with low temperature sealing (LTS) performance. The coatings are water-based and solvent-free and hence they meet modem environmental standards.

### Background

In the flexible packaging industry various technologies are used to obtain a substrate which can protect a product. Polymer films are produced via extrusion and via co-extrusion or lamination. Coatings are often applied onto filmic substrates to improve printability, sealability at lower temperatures or to add barrier characteristics. The majority of coatings are based on acrylates - to reduce seal temperatures, improve printability -, poly(vinylidene chloride) (PVdC) - to improve the oxygen barrier, sealability or printability - or ethylene - acrylic acid copolymers (EAA's) - to lower the seal temperature and improve printability.

US 5,419,960 discloses coated films wherein a base polymer film, e.g., oriented isotactic polypropylene, is coated with a composition comprising a copolymer of about 65 to 95 wt. % ethylene and about 5 to 35 wt. % of acrylic or methacrylic acid (EAA or EMAA, respectively) The coated films exhibit good low temperature sealing properties accompanied by satisfactory hot tack and resistance of the seals to immersion in water.

US 5,169,728 describes a multilayered film having a base layer and a surface layer. The film-forming component of the base layer is an EAA copolymer. The film-forming component of the surface layer is a copolymer of ethylene and up to about 25 weight percent of an alpha-olefin having from 3 to 12 carbon atoms. The multilayered film is useful for wrapping food.

WO 00/63309 discloses a coating composition containing an ethylene-acrylic acid (EAA) copolymer having an acrylic acid content of 15-20 wt.% and a melt flow index (MFI) of 10-100 g per 10 min (at 190°C, 2.16 Kg), a weight-average molar weight of up to 130 kD, which is neutralised with an excess of ammonia. The coating composition is used for coating polymer films.

The water (vapour) resistance of these coated films of the prior art is generally satisfactory, but the oxygen barrier properties are insufficient for some applications, especially in food packaging. Chlorinated polymers such as PVdC generally provide oxygen barrier properties to a sufficient degree, but the presence of chlorine is not attractive for many end users, and hence they look for alternatives.

WO 96/16799 describes a heat-sealable multilayer film comprising an oriented polypropylene (OPP) substrate layer, a layer of polyvinyl alcohol (PVOH) onto the substrate layer and an acrylic upper coating layer. The PVOH is a crosslinked PVOH and the PVOH coating is primed before applying the acrylic top layer. The acrylic polymer of the top layer can be a copolymer of acrylic acid and alkyl acrylate.

The oxygen barrier properties of this PVOH material is satisfactory at low humidities, but at higher humidity, both the water-resistance and the oxygen barrier function become insufficient.

WO 96/167972 relates to a multilayer heat sealable film comprising: i) a polyolefin film substrate; ii) a layer of EVOH copolymer and iii) a heat sealable acrylic polymeric coating applied to ii). The EVOH copolymers used in example 1 (EVAL G156B) has an ethylene content of 48% mol%, corresponding to a weight percentage of about 38%.

### Description of the invention

A novel coated film has been found which exhibits improved sealing properties, especially for use in food packaging. The novel coated film comprises a substrate layer, at least one inner coating layer and an outer coating layer, wherein an inner coating layer comprises a copolymer of ethylene and vinyl alcohol (EVOH), the EVOH copolymer having an ethylene content of at least 10 wt.% and a vinyl alcohol content of at least 75 wt.%, and the outer coating layer comprises a (meth)acrylic copolymer.

The substrate layer of base layer can be any layer having sufficient strength and sufficient adhesion for coating polymer dispersions. Examples include paper, polyamide, polyesters, polycarbonates and polyolefins. An especially suitable base material is oriented polypropylene (OPP). The substrate layer is pre-treated prior to applying the coating composition as is conventional practice, for example by priming with e.g. polyethyleneimine, by gravure printing or by corona treatment.

The EVOH layer can be applied as an aqueous dispersion having a dry solids content of between 5 and 30 wt.%, preferably between 10 and 25 wt%, and a viscosity of between 10 and 500 mPa.s, especially 25-300 mPa.s. The EVOH has a vinyl alcohol content of at least 75 wt.% in order to have sufficient dispersibility and oxygen barrier properties, and an ethylene content of at least 10 wt.% in order to have sufficient water insensitivity. Preferably, the ethylene content is between 15 and 25 wt.%. The presence of further monomers, such as vinyl acetate monomers, is not excluded, up to e.g. 20 wt.% of the total dry weight of the dry copolymer (terpolymer). Suitable EVOH copolymers are commercially available. The EVOH copolymers preferably have an melt low index (MFI) MFI of between 30 and 300 g/10 min at 230°C, 2.16 kg, more preferably between 50 and 150.

The EVOH dispersion can be prepared by slowly adding the EVOH granules to the aqueous phase, optionally already including he further additives maintaining agitation and heating to 80-100°C for several minutes to several hours (e.g. 0.5-2 hours). Agitation and heating is then gradually reduced to obtain a clear dispersion ready for application.

The acrylic outer layer can be any (meth)acrylic copolymer, as long as the polymer is heat-sealable. For the purpose of the invention, (meth)acrylic copolymers include any copolymer or mixed copolymer comprising at least (meth)acrylic acid or alkyl (meth)acrylate units. Examples include copolymers and terpolymers of (meth)acrylic acid, alkyl acrylate and/or alkyl methacrylate. Preferably, the (meth)acrylic (co)polymer has an acid content of between 10 and 30 wt.%. Especially suitable are copolymers of ethylene and acrylic acid (EAA) or ethylene and methacrylic acid (EMAA), since these copolymers are heat-sealable at relatively low temperatures (Low Temperature Sealing, LTS).

The acrylic layer can also be applied as an aqueous dispersion having a dry solids content of between 12 and 25 wt.%, preferably between 15 and 20 wt.%. An additional advantage of the use of EAA or EMAA dispersions, is that a pretreatment of the EVOH layer is not necessary. Suitable EAA dispersions are described in WO 00/63309. The EAA preferably has an acrylic acid content between 10 and 30 wt.% in order to have sufficient dispersibility. Preferably, the ethylene content is between 70 and 85 wt.%. The presence of further, preferably non-ionic, monomers is not excluded, up to e.g. 20 wt.% of the total dry weight of the dry copolymer (terpolymer).

The copolymer of the acrylic layer can have an MFI of between 20 and 1300 (g/10 min at 190°C and 2.16 Kg), preferably between 30 and 500. The acrylic acid or methacrylic acid is neutralised to a degree of between 50 and 250 %, preferably from 75 to 200 %, using alkali metal hydroxides or ammonia. The acrylic coating composition can be formulated with common additives for improving runability of the film, such as waxes, silica and the like.

The thickness of the substrate layer can be e.g. from 5 to 200 µm, especially from 15 to 100 µm, and each coating layer can have a thickness of between 0.2 and 5 µm, especially between 0.5 and 2.5 µm. The total coating thickness can be from 1 to 5 µm.

### Example

An EVOH dispersion was prepared by slowly adding EVOH granules (ethylene content 14-18%) to an aqueous phase, maintaining agitation and heating to 90°C and stirring for 1.5 hours The dispersion was cooled down slowly to avoid a hazy solution. A 15% solution was obtained with a viscosity of 200 mPa.s.

An EAA dispersion (acrylic acid content 18%) was obtained following the method described in WO 00/63309.

A4 sheets of corona-treated OPP were coated with a polyethyleneimine primer (coating weight less than 0.5 g/m²). The primer was dried in an oven.

The EVOH dispersion was applied (coating weight 1.8 g) on the primed OPP sheet and dried (dry coating weight 1.8 g/m²). The EAA dispersion was applied onto the EVOH coating and dried (coating weight 1 g/m² dry).

The OPP/EVOH/EAA structure was sealed at 90°C, 0.5 sec, 3 bar, crimp seal. Seal strength was comparable to normal OPP/EAA structure.

The OPP/EVOH/EAA structure was tested on oxygen transmission at ambient and tropical conditions and was found to be very good.

Samples prepared as above, but without an EAA coating had no sealing performance and where therefore not tested on oxygen transmission rate.

## Claims

1. A coated film comprising a substrate layer, an inner coating layer and a heat-sealable polymer outer coating layer, wherein the inner coating layer comprises a copolymer of ethylene and vinyl alcohol (EVOH), the EVOH copolymer having an ethylene content of at least 10 wt.% and a vinyl alcohol content of at least 75 wt.%, and the outer coating layer comprises a (meth)acrylic copolymer.

2. A coated film according to claim 1, wherein the EVOH copolymer has an ethylene content of between 12 and 25 wt.%, preferably between 15 and 20 wt.%.

3. A coated film according to claim 1 or 2, wherein the EVOH copolymer has a melt flow index of between 30 and 300 g/10 min at 230°C, 2.16 kg.

4. A coated film according to any one of claims 1-3, wherein the (meth)acrylic copolymer has a (meth)acrylic acid content of between 15 and 20 wt.%.

5. A coated film according to any one of claims 1-4, wherein the (meth)acrylic copolymer is a copolymer with ethylene.

6. A coated film according to claim 5, wherein the (meth)acrylate copolymer has an ethylene content of between 50 and 85 wt.%.

7. A coated film according to any one of claims 1-6, wherein the (meth)acrylate copolymer has a melt flow index of between 30 and 500 g/10 min. at 190°C, 2.16 kg.

8. A coated film according to any one of claims 1-7, wherein each coating layer has a thickness of between 0.5 and 2.5 µm.

9. A process for coating a substrate, comprising first applying to the substrate an aqueous dispersion of an EVOH copolymer having an ethylene content of at least 10 wt.% and a vinyl alcohol content of at least 75 wt.%, followed by drying, and subsequently applying an aqueous dispersion of a (meth)acrylate copolymer.

10. A process according to claim 9, wherein the aqueous dispersion of the EVOH copolymer has a dry solid content of 10-25 wt.%.

11. A process according to claim 9 or 10, wherein the (meth)acrylate copolymer comprises a copolymer of ethylene and (meth)acrylic acid, and the aqueous dispersion of the (meth)acrylate copolymer has a dry solid content of 15-20 wt.%.

12. A process according to claim 11, wherein the aqueous dispersion of a (meth)-acrylate copolymer is directly applied after said drying, without intervening priming.

## Patentansprüche

1. Beschichteter Film, umfassend eine Substratschicht, eine innere Beschichtungsschicht und eine hitzeversiegelbare äußere Polymerbeschichtungsschicht, wobei die innere Beschichtungsschicht ein Co-Polymer aus Ethylen und Vinylalkohol (EVOH) umfasst, das EVOH-Copolymer einen Ethylengehalt von wenigstens 10 Gew.-% und einen Vinylalkoholgehalt von wenigstens 75 Gew.-% hat und die äußere Beschichtungsschicht ein (Meth)Acryl-Copolymer umfasst.

2. Beschichteter Film nach Anspruch 1, wobei das EVOH-Copolymer einen Ethylengehalt zwischen 12 und 25 Gew.-%, vorzugsweise zwischen 15 und 20 Gew.-% hat.

3. Beschichteter Film nach Anspruch 1 oder 2, wobei das EVOH-Copolymer einen Schmelzflussindex zwischen 30 und 300 g/10 min. bei 230° C, 2,16 kg hat.

4. Beschichteter Film nach einem der Ansprüche 1 bis 3, wobei das (Meth)Acryl-Copolymer einen (Meth)Acrylsäuregehalt zwischen 15 und 20 Gew.-% hat.

5. Beschichteter Film nach einem der Ansprüche 1 bis 4, wobei das (Meth)Acryl-Copolymer ein Copolymer mit Ethylen ist.

6. Beschichteter Film nach Anspruch 5, wobei das (Meth)Acrylat-Copolymer einen Ethylengehalt zwischen 50 und 85 Gew.-% hat.

7. Beschichteter Film nach einem der Ansprüche 1 bis 6, wobei das (Meth)Acrylat-Copolymer einen Schmelzflussindex zwischen 30 und 500 g/10 min. bei 190° C, 2,16 kg hat.

8. Beschichteter Film nach einem der Ansprüche 1 bis 7, wobei die Beschichtungsschicht eine Stärke zwischen 0,5 und 2,5 µm hat.

9. Verfahren zur Beschichtung eines Substrats, umfassend das Auftragen einer wässrigen Dispersion eines EVOH-Copolymers mit einem Ethylengehalt von wenigstens 10 Gew.-% und einem Vinylalkoholgehalt von wenigstens 75 Gew.-% auf ein Substrat, gefolgt von einer Trocknung und anschließender Anwendung einer wässrigen Dispersion eines (Meth)Acrylat-Copolymers.

10. Verfahren nach Anspruch 9, wobei die wässrige Dispersion des EVOH-Copolymers einen Trockenfeststoffgehalt von 10 bis 25 Gew.-% hat.

11. Verfahren nach Anspruch 9 oder 10, wobei das (Meth)Acrylat-Copolymer ein Copolymer aus Ethylen und (Meth)Acrylsäure umfasst und die wässrige Dispersion des (Meth)Acrylat-Copolymers einen Trockenfeststoffgehalt von 15 bis 20 Gew.-% hat.

12. Verfahren nach Anspruch 11, wobei die wässrige Dispersion eines (Meth)Acrylat-Copolymers direkt nach der Trocknung ohne beeinflussende Vorbehandlung angewendet wird.

## Revendications

1. Film muni d'un revêtement comprenant une couche de support, une couche de revêtement intérieure et une couche de revêtement extérieure, formée d'un polymère thermoscellable,
la couche de revêtement intérieure comportant un polymère d'éthylène et d'alcool vinylique (EVOH), le copolymère EVOH ayant une teneur en éthylène d'au moins 10% en poids et une teneur en alcool vinylique d'au moins 75% en poids et la couche de revêtement extérieure comporte un copolymère (meth)acrylique.

2. Film muni d'un revêtement selon la revendication 1,
dans lequel
le copolymère EVOH a une teneur en éthylène comprise entre 12% et 25% en poids et, de préférence, comprise entre 15% et 20% en poids.

3. Film muni d'un revêtement selon la revendication 1 ou 2,
dans lequel
le copolymère EVOH a un indice d'écoulement, à l'état fondu, compris entre 30g et 300g/ 10 min à 230°C, 2,16 kg.

4. Film muni d'un revêtement selon l'une des revendications 1 à 3,
dans lequel
le copolymère (meth)acrylique a une teneur en acide (méth)acrylique comprise entre 15% et 20% en poids.

5. Film muni d'un revêtement selon l'une des revendications 1 à 4,
dans lequel
le copolymère (méth)acrylique est un copolymère avec de l'éthylène.

6. Film muni d'un revêtement selon la revendication 5,
dans lequel
le copolymère de (méth)acrylate a une teneur en éthylène comprise entre 50% et 85% en poids.

7. Film muni d'un revêtement selon l'une quelconque des revendications 1 à 6,
dans lequel
le copolymère de (méth)acrylate a un indice d'écoulement à l'état fondu compris entre 30g et 500 g/ 10min, à 190°C, 2,16 kg.

8. Film muni d'un revêtement selon l'une quelconque des revendications 1 à 7,
dans lequel
chacune des couches de revêtement a une épaisseur comprise entre 0,5 µm et 2,5 µm.

9. Procédé de revêtement d'un substrat selon lequel on applique d'abord sur le substrat une dispersion aqueuse d'un copolymère EVOH ayant une teneur en éthylène d'au moins 10% en poids et une teneur en alcool vinylique d'au moins 75 % en poids, puis on sèche et ensuite on applique une dispersion aqueuse d'un copolymère de (méth)acrylate.

10. Procédé selon la revendication 9,
selon lequel
la dispersion aqueuse de copolymère EVOH a une teneur en matière solide sèche de 10% à 25% en poids.

11. Procédé selon l'une des revendications 9 ou 10,
selon lequel
le copolymère de (méth)acrylate contient un copolymère d'éthylène et d'acide (méth)acrylique et la dispersion aqueuse du copolymère de (méth)acrylate a une teneur en matière solide sèche comprise en 15% et 20% en poids.

12. Procédé selon la revendication 11,
selon lequel
la dispersion aqueuse de copolymère de (méth)acrylate est directement appliquée après séchage sans application d'une couche primaire.
